(19) Europäisches Patentamt
European Patent Office
Office européen des brevets

(11) Veröffentlichungsnummer: **0 385 086 B1**

(12) **EUROPÄISCHE PATENTSCHRIFT**

(45) Veröffentlichungstag der Patentschrift: **31.08.94**

(51) Int. Cl.5: **C08L 67/02**, C08L 69/00, C08L 101/00, //(C08L67/02, 69:00,101:00)

(21) Anmeldenummer: **90101174.2**

(22) Anmeldetag: **20.01.90**

# (54) Mischungen aus Polyalkylenterephthalaten, Polycarbonaten sowie Elastomeren.

(30) Priorität: **02.02.89 DE 3903102**

(43) Veröffentlichungstag der Anmeldung:
**05.09.90 Patentblatt 90/36**

(45) Bekanntmachung des Hinweises auf die Patenterteilung:
**31.08.94 Patentblatt 94/35**

(84) Benannte Vertragsstaaten:
**BE DE ES FR GB IT NL SE**

(56) Entgegenhaltungen:
**EP-A- 0 019 126**
**EP-A- 0 019 127**
**EP-A- 0 162 382**
**EP-A- 0 164 477**
**EP-A- 0 297 353**
**US-A- 4 368 315**

(73) Patentinhaber: **BAYER AG**
**D-51368 Leverkusen (DE)**

(72) Erfinder: **Freitag, Dieter, Dr.**
**Hasenheide 10**
**D-4150 Krefeld 1 (DE)**
Erfinder: **Idel, Karsten-Josef, Dr.**
**Am Schwarzkamp 38**
**D-4150 Krefeld (DE)**
Erfinder: **Fengler, Gerd, Dr.**
**Bethelstrasse 16**
**D-4150 Krefeld (DE)**
Erfinder: **Grigo, Ulrich, Dr.**
**Michelsheide 9**
**D-4152 Kempen 3 (DE)**
Erfinder: **Kirsch, Jürgen, Dr.**
**Hahnenweg 1**
**D-5000 Köln 80 (DE)**
Erfinder: **Westeppe, Uwe, Dr.**
**Vogelskamp 72**
**D-4020 Mettman (DE)**

**EP 0 385 086 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Mischungen aus Polyalkylenterephthalaten, speziellen, neuen Polycarbonaten sowie Elastomeren sowie die Verwendung der Mischungen zur Herstellung von Formkörpern.

Mischungen aus Polyalkylenterephthalaten, Polycarbonaten und Kautschuk-elastischen Polymerisaten sind bekannt (s. z.B. DE-2 343 609, DE-2 248 242 und EP-105 388). Diese Mischungen weisen viele positive Eigenschaften auf, werden jedoch manchen Anforderungen nicht gerecht. Wünschenswert ist insbesondere eine Verbesserung der Tieftemperaturzähigkeit sowie gleichzeitig der Wärmeformbeständigkeit und des Verarbeitungsverhaltens, insbesondere des Fließverhaltens.

Es wurde nun gefunden, daß bei Einsatz spezieller, neuer Polycarbonate und/oder Polyestercarbonate Mischungen erhalten werden mit guten Tieftemperaturzähigkeiten und Wärmeformbeständigkeiten in Kombination mit ausgezeichnetem Fließvermögen.

Gegenstand der Erfindung sind somit Mischungen enthaltend

A) 0,1 bis 99,7 Gew.-%, vorzugsweise 10 bis 90 Gew.-%, insbesondere 20 bis 80 Gew.-% Polyalkylenterephthalate,

B) 0,1 bis 99,7 Gew.-%, vorzugsweise 1 bis 90 Gew.-%, insbesondere 1 bis 50 Gew.-% thermoplastische, aromatische Polycarbonate auf Basis von Diphenolen der Formel (I)

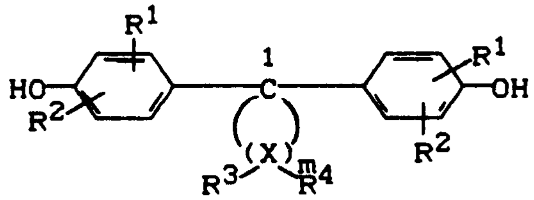 (I),

worin

| | |
|---|---|
| $R^1$ und $R^2$ | gleich oder verschieden sind und für Wasserstoff, Halogen, bevorzugt Chlor und Brom, $C_1$-$C_8$-Alkyl, bevorzugt Methyl, Ethyl, Propyl, $C_5$-$C_6$-Cycloalkyl, bevorzugt Cyclohexyl, $C_6$-$C_{10}$-Aryl, bevorzugt Phenyl, und $C_7$-$C_{12}$-Aralkyl, bevorzugt Phenyl-$C_1$-$C_4$-alkyl, insbesondere Benzyl, stehen, |
| m | eine ganze Zahl von 4 bis 7, bevorzugt 4 und 5, ist, |
| $R^3$ und $R^4$ | für jedes X individuell wählbar ist und unabhängig voneinander Wasserstoff oder $C_1$-$C_6$-Alkyl, bevorzugt Methyl, bedeuten und |
| X | Kohlenstoff bedeutet, mit der Maßgabe, daß an mindestens einem Ringkohlenstoffatom die Reste $R^3$ und $R^4$ gleichzeitig für $C_1$-$C_6$-Alkyl stehen, und |

C) 0,1 bis 99,7 Gew.-%, vorzugsweise 1 bis 50 Gew.-%, insbesondere 1 bis 30 Gew.-% Elastomere, mit der Maßgabe, daß sich die Komponenten A) bis C) zu 100 Gew.-% addieren.

Polyalkylenterephthalate (Komponente A)) im Sinne der Erfindung sind Reaktionsprodukte aus aromatischen Dicarbonsäuren und ihren reaktionsfähigen Derivaten (z.B. Dimethylestern oder Anhydriden) und aliphatischen, cycloaliphatischen oder araliphatischen Diolen sowie Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII; Seite 695 ff, Carl Hanser Verlag, München 1973).

Die bevorzugten Polyalkylenterephthalate enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4- und/oder Cyclohexan-dimethanol-1,4-Reste.

Neben den Terephthalsäureresten können die Polyalkylenterephthalate bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure und/oder Cyclohexandiessigsäure.

Außerdem können die Polyalkylenterephthalate bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-$\beta$-hydroxyethoxyphenyl)-propan und/oder 2,2-Bis-(4-hydroxypropoxyphenyl)-propan (DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und/oder Pentaerythrit.

Üblicherweise wird nicht mehr als 1 Mol-% des Verzweigungsmittels, bezogen auf die Säurekomponente, verwendet.

Ganz besonders bevorzugt sind Polyalkylenterephthalate, die allein aus Terephthalsäure oder deren reaktionsfähigen Derivaten, z.B. deren Dialkylestern, und Ethylenglykol und/oder Butandiol-1,4 und/oder Cyclohexan-dimethanol-1,4 bestehen.

Die als Komponente A) vorzugsweise eingesetzten Polyalkylenterephthalate besitzen im allgemeinen eine Intrinsic-Viskosität von etwa 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25° C.

Bevorzugt werden als Komponente B) Polycarbonate eingesetzt, die auf Dihydroxydiphenylcycloalkanen der Formel (I) basieren, in denen 1 bis 2 Ringkohlenstoffatome, insbesondere 1 Ringkohlenstoffatom, gleichzeitig durch Alkylreste substituiert sind (ist) und wobei sich das (die) alkyldisubstituierte(n) Ringkohlenstoffatom(e) in $\beta$-Stellung zum Kohlenstoffatom $C^1$ befindet(n).

Besonders bevorzugt sind Dihydroxydiphenylcycloalkane mit 5 oder 6 Ring-C-Atomen im cycloaliphatischen Rest (m = 4 oder 5 in der Formel (I)), beispielsweise die Diphenole der Formeln

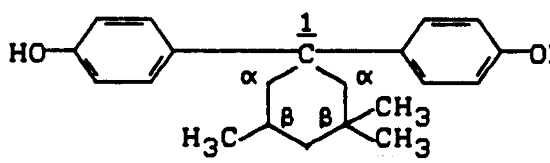
(II)

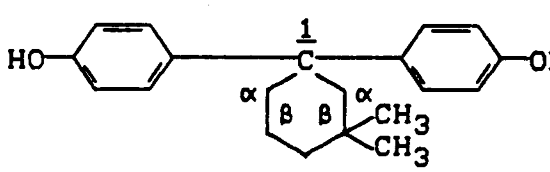
(III) und

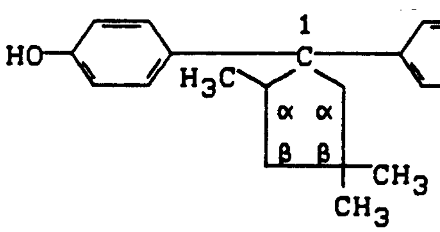
(IV),

wobei das 1,1-Bis-(4-hydroxyphenyl)-3,3,5-trimethylcyclohexan (Formel II) ganz besonders bevorzugt ist.

Die Dihydroxydiphenylcycloalkane der Formel (I) können in an sich bekannter Weise durch Kondensation von Phenolen der Formel (V)

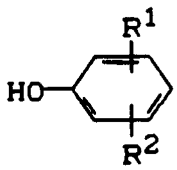
(V)

mit Ketonen der Formel (VI)

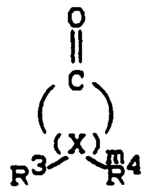

(VI)

hergestellt werden, wobei in den Formeln (V) und (VI) X, $R^1$, $R^2$, $R^3$, $R^4$ und m die für Formel (I) angegebene Bedeutung haben.

Die Kondensation wird im allgemeinen in Gegenwart saurer Katalysatoren durchgeführt. Die Temperaturen betragen im allgemeinen etwa -30 bis 300° C, vorzugsweise -15 bis 150° C und die Drücke ca. 1 bis 20 bar, vorzugsweise 1 bis 10 bar. Zur Herstellung der Bisphenole der Formel (I) werden üblicherweise etwa 2 bis 10 Mol, vorzugsweise 2,5 bis 6 Mol Phenol der Formel (V) pro Mol Keton der Formel (VI) eingesetzt. Neben den sauren Katalysatoren können noch Cokatalysatoren für die Kondensation eingesetzt werden. Weitere Einzelheiten der Herstellung der Bisphenole der Formel (I) sind der deutschen Patentanmeldung P 38 32 396 und der deutschen Patentanmeldung P 38 33 953.6 zu entnehmen.

Zur Herstellung der als Komponente B) einzusetzenden Polycarbonate können die Diphenole der Formel (I) auch im Gemisch mit anderen Diphenolen, beispielsweise mit solchen der Formel

HO-Z-OH (VII),

eingesetzt werden.

Geeignete andere Diphenole der Formel (VII) sind solche, in denen Z ein ein- oder mehrkerniger, gegebenenfalls substituierter aromatischer Rest mit 6 bis 30 C-Atomen darstellt. Die mehrkernigen aromatischen Reste können durch Brückenglieder, wie Heteroatome (S, O, N), Alkylidenreste mit 1 bis 6 C-Atomen und Cycloalkylidenresten mit 5 bis 7 C-Atomen mit Ausnahme der in Formel (I) genannten Cycloalkylidenreste, ein- oder mehrfach unterbrochen sein. Als Diphenole der Formel (VII) kommen beispielsweise in Frage Resorcin, Dihydroxidiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole und deren kernalkylierte und kernhalogenierte Verbindungen sowie $\alpha,\omega$-Bishydroxyaryloxyendgruppen-haltige Polydiorganosiloxane mit einem Polymerisationsgrad $P_n$ von 5 bis 100.

Diese und weitere geeignete andere Diphenole sind z.B. in den US-PS 3 419 634, 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 056, der französischen Patentschrift 1 561 518 und in der Monographie "H. Schnell, Chemistry and Physics of Polycarbonates, Interscience Publishers, New York 1964", beschrieben.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1 1-Bis-(4-hydroxyphenyl)-cyclohexan.

Insbesondere ist 2,2-Bis-(4-hydroxyphenyl)-propan bevorzugt.

Die Diphenole können sowohl einzeln als auch im Gemisch eingesetzt werden.

Die Diphenole der Formel (I) und die anderen genannten, bekannten Diphenole der Formel (VII) können in einem molaren Verhältnis untereinander eingesetzt werden, das bei 100(I):0(VII) bis 1(I):99(VII), bevorzugt bei 100(I):0(VII bis 10(I):90(VII), insbesondere bei 100(I):0(VII) bis 20(I):80(VII), liegt.

Polycarbonate, die neben den neuen Diphenolen der Formel (I) noch bekannte Diphenole enthalten, und als Komponente B) eingesetzt werden sollen, können auch hergestellt werden, indem man zunächst Polycarbonate ausschließlich auf Basis der neuen Diphenole herstellt sowie Polycarbonate ausschließlich auf Basis der bekannten Diphenole und diese Polycarbonate dann miteinander so vermischt, daß ein Verhältnis von neuen Diphenolen zu bekannten Diphenolen im Polycarbonat erhalten wird, das den zuvor beschriebenen Verhältnissen der Diphenole untereinander entspricht.

Die einzusetzenden Polycarbonate können in an sich bekannter Weise verzweigt sein. Wenn Verzweigung gewünscht wird, kann sie in bekannter Weise durch Einkondensieren geringer Mengen, vorzugsweise Mengen von ca. 0,05 bis 2,0 Mol-%, bezogen auf eingesetzte Diphenole, an 3-oder mehr als 3-funktionellen Verbindungen, insbesondere solchen mit 3 oder mehr als 3 phenolischen Hydroxygruppen, erreicht werden. Die Verzweiger sind bekannt und beispielsweise beschrieben in Encyclopedia of Polymer Science and Engineering S. 660, Volume 11, John Wiley, New York, 1988.

Die als Komponente B) einzusetzenden Polycarbonate können nach verschiedenen bekannten Verfahren hergestellt werden. Genannt werden beispielsweise das Phasengrenzflächenverfahren sowie das Verfahren in homogener Lösung, das sogenannte "Pyridinverfahren" und das Schmelzumesterungsverfahren (vgl. H. Schnell, "Chemistry and Physics of Polycarbonates", Polymer Reviers, Vol. IX, Seite 33 ff., Interscience Publ., 1964). Bevorzugt werden die Polycarbonate nach dem Phasengrenzflächenverfahren hergestellt.

Die Polycarbonate (Komponente B)) haben Molekulargewichte $\overline{M}w$ (Gewichtsmittel, ermittelt durch Gelchromatographie nach vorheriger Eichung), die üblicherweise bei 10 000 bis 200 000, bevorzugt bei 20 000 bis 80 000 liegen.

Die als Komponente C) einzusetzenden Elastomeren sind Polymere, die eine Glasübergangstemperatur von unter 0° C, vorzugsweise von unter -10° C und insbesondere von -15° C bis -140° C besitzen.

Beispiele für solche Elastomere sind die verschiedensten Kautschuke, wie Ethylen-Propylen-Kautschuk, Polyisopren, Polychloropren, Polysiloxane, ataktisches Polypropylen, Dien-, Olefin- und Acrylatkautschuke sowie Naturkautschuke, Styrol-Butadien-Blockcopolymere, Ethylen-Copolymerisate mit Vinylacetat oder mit (Meth)-Acrylsäureestern, elastische Polyurethane, elastische Polycarbonat-Polyether- sowie Polyester-Polyether-Blockcopolymere.

Bevorzugt werden eingesetzt Copolymerisate - insbesondere Pfropfcopolymerisate (Pfropfkautschuke) - mit kautschukelastischen Eigenschaften, die im wesentlichen aus mindestens zwei der folgenden Monomeren erhältlich sind: Chloropren, Butadien, Isopren, Isobuten, Styrol, Acrylnitril, Ethylen, Propylen, Vinylacetat und (Meth)-Acrylsäureester mit 1 bis 18 C-Atomen in der Alkoholkomponente, also Polymerisate, wie sie z.B. in "Methoden der Organischen Chemie", Houben-Weyl, Band 14/1, Georg Thieme Verlag, Stuttgart 1961, Seiten 393 bis 406 und in C.B. Bucknall, "Thoughened Plastics", Appl. Science Publishers, London, 1977 beschrieben sind. Die bevorzugten Polymerisate besitzen einen Gelgehalt von über 20, vorzugsweise über 40 Gew.-%.

Genannt werden z.B. Ethylen/Vinylacetat-Copolymerisate mit 15 bis 45 Gew.-% Vinylacetat-Einheiten und Schmelzindices von nicht fließfähig bis 1000, vorzugsweise von 0,1 bis 20, gemessen bei einer 190° C und 2,16 kp Belastung nach DIN 53 735.

Darüber hinaus sind als Elastomere C) geeignet selektiv hydrierte Blockcopolymerisate eines vinylaromatischen Monomeren (X) und eines konjugierten Diens (Y) vom X-Y-Typ. Diese Blockcopolymerisate können nach bekannten Verfahren hergestellt werden.

Im allgemeinen kann für die Herstellung der geeigneten X-Y-Blockcopolymerisate aus z.B. Styrol, $\alpha$-Methylstyrol und/oder Vinyltoluol und aus konjugierten Dienen, wie Butadien und/oder Isopren, die für die Herstellung von Styrol-Dien-Blockcopolymerisaten verwendete Technik benutzt werden, die in "Encyclopedia of Polymer Science and Technology", Bd. 15, Interscience, N.Y. (1971) auf den Seiten 508 ff' beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben.

Derartige selektiv hydrierte Blockcopolymerisate werden z.B. in der DE-OS 30 00 282 beschrieben.

Ebenfalls geeignet sind mit Styrol und/oder Acrylnitril und/oder (Meth)-Acrylsäurealkylestern gepfropfte Polybutadiene, Butadien/Styrol-Copolymerisate und Poly(meth)acrylsäureester, z.B. Copolymerisate aus Styrol oder Alkylstyrol und konjugierten Dienen (schlagfestes Polystyrol), d.h. Copolymerisate der in der DE-OS 16 94 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 23 48 377 (= US-PS 3 919 353) oder in DE-3 105 364 und DE-3 019 233 beschrieben sind.

Besonders bevorzugte Elastomere sind ABS-Polymerisate (sowohl Misch- als auch Pfropftypen), wie sie z.B. in der DE-OS 20 35 390 (= US-PS 3 644 574) oder in der DE-OS 22 48 242 (= GB-PS 1 409 275) beschrieben sind.

Daneben werden besonders bevorzugt Elastomere eingesetzt, die durch Pfropfreaktion von

I. 10 bis 40, vorzugsweis 10 bis 35, insbesondere 15 bis 25, Gew.-%, bezogen auf Pfropfprodukt, mindestens eines (Meth-)Acrylsäureesters und/oder eines Gemisches aus

10 bis 35, vorzugsweise 20 bis 35, Gew.-%, bezogen auf Gemisch, Acrylnitril und

65 bis 90, vorzugsweise 65 bis 80 Gew.-%, bezogen auf Gemisch, Styrol auf

II. 60 bis 90, vorzugsweise 65 bis 90, insbesondere 75 bis 85 Gew.-%, bezogen auf Pfropfprodukt eines Butadien-Polymerisats mit mindesetens 70 Gew.-%, bezogen auf II, Butadienresten als Pfropfgrundlage erhältlich sind,

wobei vorzugsweise der Gelanteil der Pfropfgrundlage II ≧70 % (in Toluol gemessen), der Pfropfgrad G 0,15 bis 0,55 und der mittlere Teilchendurchmesser $d_{50}$ des Pfropfpolymerisats C) 0,2 bis 0,6, vorzugsweise 0,3 bis 0,5 µm betragen (vgl. z.B. DE 3 324 398 und EP 56 243).

Besonders bevorzugte Elastomere sind auch Pfropfpolymerisate aus

a) 25 bis 98 Gew.-%, bezogen auf Pfropfprodukt, Acrylatkautschuk mit einer Glasübergangstemperatur unter -20° C als Pfropfgrundlage und

b) 2 bis 75 Gew.-%, bezogen auf Pfropfprodukt, mindestens eines polymerisierbaren, ethylenisch ungesättigten Monomeren, dessen bzw. deren in Abwesenheit von (a) entstandenen Homo- bzw. Copolymerisate eine Glasübergangstemperatur über 25° C hätten, als Pfropfmonomere (vgl. z.B. EP 50 265).

Neben den zuvor genannten Elastomeren können auch elastische Polyurethane (z.B. Texin®), elastische Polyester-Polyether-Blockcopolymere (z.B. Hytrel®) sowie elastische Polycarbonat-Polyether-Blockcopolymere eingesetzt werden. Diese Elastomeren sind bekannt und beispielsweise beschrieben in H.G. Elias, Makromoleküle, Hüthig u. Wepf Verlag Basel, 4. Auflage 1981, S. 787, und A. Noshay u. J.E. McGrath, Block Copolymers, Academic Press New York, 1977, S. 341.

Außerdem eignen sich als einzusetzende Elastomere Silikonpfropfkautschuke wie sie beispielsweise in DE 3 629 763 beschrieben sind.

Die erfindungsgemäßen 3-Komponenten-Mischungen können in üblicher Weise hergestellt werden, indem man eine oder zwei Komponenten der Mischungen vorlegt und die anderen Komponenten bzw. die andere Komponente der vorgelegten Komponente bzw. den vorgelegten Komponenten zumischt. Es ist jedoch auch möglich alle drei Komponenten gleichzeitig zu vermischen. Das Mischen der Komponenten kann auf Knetern, Walzen oder Ein- oder Mehrwellenextrudern erfolgen.

Den erfindungsgemäßen Mischungen können gegebenenfalls noch übliche Additive hinzugegeben werden, z.B. Gleit-und Entformungsmittel, Nukleierungsmittel, Weichmacher, Stabilisatoren, Flammfest-Additive, Füll- und Verstärkungsstoffe und/oder Farbstoffe.

Diese Additive können in den üblichen Mengen entweder vor der Herstellung der erfindungsgemäßen Mischungen den Komponenten A) und/oder B) zugemischt werden oder nachträglich in die erfindungsgemäßen Mischungen eingearbeitet werden. Die Menge der Additive wird dabei so bemessen, daß die Additive die gewünschte Wirkung in der Mischung entfalten können. Sie ist leicht durch Vorversuche zu ermitteln.

Die erfindungsgemäßen Mischungen lassen sich zur Herstellung von Formkörpern in üblicher Weise verarbeiten.

Die daraus hergestellten Formkörper finden Verwendung im Automobilbereich (Stoßfänger, Karosserieteile und Karosserieanbauteile) und zeichnen sich aus durch eine gute Tieftemperaturzähigkeit und Wärmeformbeständigkeit sowie ein günstiges Verarbeitungsfenster.

## Beispiele

### Eingesetzte Substanzen (Komponenten)

A1) Das eingesetzte Polybutylenterephthalat hatte eine Intrinsic-Viskosität von 1,25 dl/g, gemessen in o-Dichlorbenzol/Phenol (1:1) bei 25° C.

B1) Das eingesetzte Homopolycarbonat auf Basis Bisphenol-A (BPA-PC) hatte eine relative Lösungsviskosität von 1,28, gemessen in $CH_2Cl_2$ bei 25° C und einer Konzentration von 0,5 g/ml; das eingesetzte Homopolycarbonat auf Basis 1,1-Bis-(4-hydroxyphenyl)-3,3,5-trimethylcyclohexan (= HIP), (HIP-PC) hatte unter den gleichen Bedingungen eine relative Lösungsviskosität von 1,301.

B2) Die eingesetzten Copolycarbonate auf Basis von Bisphenol-A und 1,1-Bis-(4-hydroxyphenyl)-3,3,5-trimethylcyclohexan hatten folgende Lösungsviskositäten, gemessen in $CH_2Cl_2$ bei 25° C und einer Konzentration von 0,5 g/ml:

(HIP X-PC (= Copolycarbonat mit X % HIP-PC und (100-X) % BPA-PC))

| Typ | relative Lösungsviskosität |
|---|---|
| HIP 20-PC | 1.291 |
| HIP 35-PC | 1.300 |
| HIP 40-PC | 1.300 |
| HIP 55-PC | 1.300 |

C) Ein Emulsionspolymerisat (P 80 MAB4) aus 80 Gew.-Teilen vernetztem Polybutadien (Gelgehalt über 70 %, gemessen in Toluol) und 20 Gew.-Teilen Pfropfauflage aus 18 Gew.-Teilen Methylmethacrylat und 2 Gew.-Teilen n-Butylacrylat, wobei der mittlere Teilchendurchmesser der in Latexform vorliegenden Pfropfgrundlage zwischen 0,3 und 0,4 µm lag (vgl. Angaben in DE-3 105 364 und DE-3 019 233).

D) Bei allen Versuchen wurden als übliche Additive Nukleierungsmittel (Mikrotalk MVR), Entformungsmittel (PE-Wachs 520 Fa. Hoechst) und Stabilisatoren (Phosphorigsäure-(1-methylethyliden)di-4,1-phenyliden-tetrakis(3-ethyl-(3-oxetanyl)methyl)ester, CA: (53 184-75-1);
4,8-Dicyclohexyl-6-hydroxy-2,10-dimethyl-12H-dibenzo(d,g)(1,3,2)dioxaphosphocin, CA: (73 912-21-7) in üblichen Mengen zugesetzt.

Herstellung und Prüfung der Formmassen

Auf einem kontinuierlich arbeitenden Doppelwellenextruder wurden das Polyalkylenterephthalat A) sowie das Polycarbonat B) aufgeschmolzen und zu deren Schmelze der Kautschuk C) zudosiert und in der Schmelze homogenisiert. Die Zylindertemperaturen wurden so gewählt, daß Massetemperaturen von 260-300 ° C eingehalten wurden. Der Schmelzestrang wurde in Wasser abgeleitet, granuliert und getrocknet.

Von den Formmassen wurden auf einer üblichen Spritzgußmaschine 80 x 10 x 4 mm Prüfstäbe hergestellt. Geprüft wurden der Biege-E-Modul (DIN 53 457), Wärmeformbeständigkeit (Vicat B) (DIN 53 460) sowie die Schlagzähigkeit bzw. Kerbschlagzähigkeit nach Izod (ISO 180) bei verschiedenen Temperaturen und daraus der Spröd/Zäh-Übergang ermittelt.

Der Schubmodul wurde mit einem Torsionspendel der Firma Brabender, Typ 80 2,301, oberhalb Raumtemperatur gemessen. Die Proben wurden mit einer Aufheizrate von 1 K/min an die genannte Temperatur herangeführt, die Proben erfuhren während der gesamten Meßzeit eine Zugbelastung von 10 p. Das Drehmoment betrug 1570 $g/cm^2$.

**Tabelle 1:**

| Beispiel-Nr. | PBT [%] | HIP 20 [%] | HIP 35 [%] | HIP 40 [%] | HIP 55 [%] | HIP 100 [%] | BPA-PC [%] | P80MAB4 [%] |
|---|---|---|---|---|---|---|---|---|
| 1 | 73 | - | - | - | - | 5 | - | 20 |
| 2 | 68 | - | - | - | 10 | - | - | 20 |
| 3 | 58 | - | - | - | 20 | - | - | 20 |
| 4 | 38 | - | - | - | 40 | - | - | 20 |
| 5 | 36 | 53 | - | - | - | - | - | 10 |
| 6 | 36 | - | 53 | - | - | - | - | 10 |
| 7 | 36 | - | - | - | 53 | - | - | 10 |
| 8(Vergleich) | 58 | - | - | - | - | | 20 | 20 |

**Tabelle 2:**

| Beispiel-Nr. | Biege-E-Modul [MPA] | $a_k$ (kJ/m²) RT | $a_k$ ±0°C | $a_k$ -10°C | $a_k$ -20°C | $a_k$ -30°C | Vicat B [°C] | Schubmodul G' bei 150°C [MPA] |
|---|---|---|---|---|---|---|---|---|
| 1 | 1648 | 14 | 11,5 | 8,7 | 9,5 | 8,0 | 142 | - |
| 2 | 1500 | 72,7 | - | - | 68,0 | 59,7 | 127 | 38 |
| 3 | 1665 | 68,2 | - | - | 56,8 | 32,1 | 131 | 50 |
| 4 | 1700 | 48,1 | - | - | 31,0 | 30,6 | 138 | - |
| 5 | - | 60,4 | - | - | - | 50,7 | 132 | - |
| 6 | - | 53,1 | 42,2 | 37,6 | - | - | 142 | - |
| 7 | - | 33,9 | 22,2 | - | - | - | 157 | - |
| 8 (Vergleich) | 1670 | 68 | - | - | 55 | - | 115 | 25 |

Wie aus den Tabellen ersichtlich ist (Vergleich zwischen Beispielen, insbesondere Beispiel 3 mit Vergleichsbeispiel 8), zeichnen sich die erfindungsgemäßen Mischungen durch eine günstigere Tieftemperaturzähigkeit-Wärmeformbeständigkeits-Relation aus.

## Patentansprüche

1. Mischungen enthaltend
   A) 0,1 bis 99,7 Gew.-% Polyalkylenterephthalate,
   B) 0,1 bis 99,7 Gew.-% thermoplastische, aromatische Polycarbonate auf Basis von Diphenolen der Formel

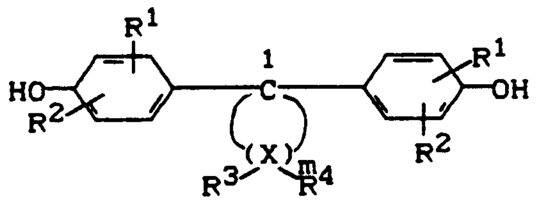

,

worin

| | |
|---|---|
| $R^1$ und $R^2$ | gleich oder verschieden sind und für Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl, stehen, |
| m | eine ganze Zahl von 4 bis 7, |
| $R^3$ und $R^4$ | für jedes X individuell wählbar ist und unabhängig voneinander Wasserstoff oder $C_1$-$C_6$-Alkyl bedeuten und |
| X | Kohlenstoff bedeutet, mit der Maßgabe, daß an mindestens einem Ringkohlenstoffatom die Reste $R^3$ und $R^4$ gleichzeitig für $C_1$-$C_6$-Alkyl stehen, und |

   C) 0,1 bis 99,7 Gew.-% Elastomere, mit der Maßgabe, daß sich die Komponenten A) bis C) zu 100 Gew.-% addieren.

2. Mischungen gemäß Anspruch 1 enthaltend 10 bis 90 Gew.-% Polyalkylenterephthalate.

3. Mischungen gemäß Anspruch 1 enthaltend 1 bis 20 Gew.-% thermoplastische, aromatische Polycarbonate.

4. Mischungen gemäß Anspruch 1 enthaltend 1 bis 50 Gew.-% Elastomere.

5. Mischungen gemäß Anspruch 1 enthaltend Gleit- und Entformungsmittel, Nukleierungsmittel, Weichmacher, Stabilisatoren, Flammfest-Additive, Füll- und Verstärkerstoffe und/oder Farbstoffe.

6. Verwendung der Mischungen nach Ansprüchen 1 bis 5 zur Herstellung von Formkörpern.

## Claims

1. Blends containing
   A) 0.1 to 99.7% by weight of polyalkylene terephthalates,
   B) 0.1 to 99.7% by weight of thermoplastic aromatic polycarbonates based on diphenols corresponding to the following formula:

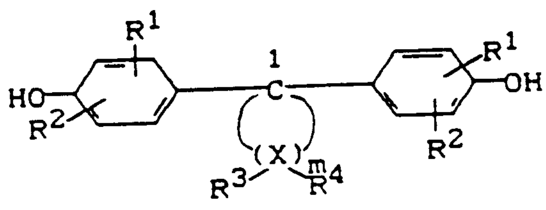

in which

| | |
|---|---|
| $R^1$ and $R^2$ | may be the same or different and represent hydrogen, halogen, $C_{1-8}$ alkyl, $C_{5-6}$ cycloalkyl, $C_{6-10}$ aryl and $C_{7-12}$ aralkyl, |

m is an integer of 4 to 7,
$R^3$ and $R^4$ may be individually selected for each X and, independently of one another, represent hydrogen or $C_{1-6}$ alkyl and
X is carbon, with the proviso that, at at least one ring carbon atom, the substituents $R^3$ and $R^4$ cannot both be $C_{1-6}$ alkyl, and

C) 0.1 to 99.7% by weight of elastomers, with the proviso that components A) to C) add up to 100% by weight.

**2.** Blends as claimed in claim 1 containing 10 to 90% by weight of polyalkylene terephthalates.

**3.** Blends as claimed in claim 1 containing 1 to 20% by weight of thermoplastic aromatic polycarbonates.

**4.** Blends as claimed in claim 1 containing 1 to 50% by weight of elastomers.

**5.** Blends as claimed in claim 1 containing lubricants and demoulding agents, nucleating agents, plasticizers, stabilizers, flameproofing additives, fillers and reinforcing materials and/or dyes.

**6.** The use of the blends claimed in claims 1 to 5 for the production of mouldings.

## Revendications

**1.** Mélanges contenant :

A) 0,1 à 99,7 % en poids de téréphtalates de polyalkylène,

B) 0,1 à 99,7 % en poids de polycarbonates aromatiques thermoplastiques à base de diphénols de formule

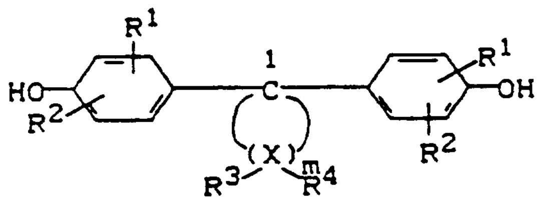

dans laquelle

$R^1$ et $R^2$, ayant des significations identiques ou différentes, représentent chacun l'hydrogène, un halogène, un groupe alkyle en $C_1$-$C_8$, cycloalkyle en $C_5$-$C_6$, aryle en $C_6$-$C_{10}$ ou aralkyle en $C_7$-$C_{12}$,
m est un nombre entier allant de 4 à 7,
$R^3$ et $R^4$, qui peuvent être choisis individuellement pour chacun des atomes X, représentent chacun, indépendamment l'un de l'autre, l'hydrogène ou un groupe alkyle en $C_1$-$C_6$, et
X représente le carbone, sous réserve que, sur au moins un atome de carbone cyclique, les symboles $R^3$ et $R^4$ représentent tous deux des groupes alkyle en $C_1$-$C_6$, et

C) 0,1 à 99,7 % en poids d'élastomères,

les pourcentages indiqués pour les composants A) à C) représentant au total 100 % en poids.

**2.** Mélanges selon la revendication 1, contenant 10 à 90 % en poids de téréphtalates de polyalkylène.

**3.** Mélanges selon la revendication 1, contenant 1 à 20 % en poids de polycarbonates aromatiques thermoplastiques.

**4.** Mélanges selon la revendication 1, contenant 1 à 50 % en poids d'élastomères.

**5.** Mélanges selon la revendication 1, contenant des lubrifiants et agents de démoulage, agents de nucléation, plastifiants, stabilisants, additifs ignifugeants, matières de charge et renforçantes et/ou

colorants.

**6.** Utilisation des mélanges selon les revendications 1 à 5 pour la fabrication d'objets moulés.